(19) Europäisches Patentamt
European Patent Office
Office européen des brevets

(11) **EP 1 785 294 B1**

(12) **EUROPÄISCHE PATENTSCHRIFT**

(45) Veröffentlichungstag und Bekanntmachung des Hinweises auf die Patenterteilung:
**01.10.2008 Patentblatt 2008/40**

(51) Int Cl.:
***B60G 21/055*** (2006.01)

(21) Anmeldenummer: **06023282.4**

(22) Anmeldetag: **09.11.2006**

(54) **Verstellbare Stabilisatoranordnung**

Adjustable stabiliser arrangement

Agencement stabilisateur ajustable

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.11.2005 DE 102005054799**
**23.02.2006 DE 102006008368**

(43) Veröffentlichungstag der Anmeldung:
**16.05.2007 Patentblatt 2007/20**

(73) Patentinhaber: **ZF Friedrichshafen AG**
**88046 Friedrichshafen (DE)**

(72) Erfinder: **Kühnel, Joachim**
**97456 Dittelbrunn (DE)**

(56) Entgegenhaltungen:
WO-A-20/04037574    DE-A1- 10 107 522
DE-A1- 10 360 291    JP-A- 2001 233 034
US-B1- 6 425 585

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine verstellbare Stabilisatoranordnung gemäß dem Oberbegriff von Patentanspruch 1.

Eine verstellbare Stabilisatoranordnung weist vielfach einen geteilten Stabilisator konventioneller Bauart auf, zwischen dessen Stabilisatorabschnitten ein Schwenkmotor mit elektrischer oder hydraulischer Druckversorgung angeordnet ist. Ein hydraulischer Schwenkmotor benötigt im Vergleich zum elektrischen Schwenkmotor einen deutlich kürzeren axialen Bauraum, da man die zur Energieerzeugung und Übertragung notwendigen Komponenten wie Ventile, Speicher oder Pumpe dezentral im Fahrzeug anordnen kann, verbunden mit den Nachteilen des Montageaufwands und des Leckagerisikos.

Moderne Fahrzeuge verfügen zwar über eine Einzelradaufhängung, doch wirkt ein Stabilisator bei Geradeausfahrt dem Grundgedanken dieser Achsbauweise entgegen, indem eine Einfederung eines Rades auf das andere Rad übertragen wird. Bei einer verstellbaren Stabilisatoranordnung kann man die beiden Stabilisatorenden häufig entkoppeln, so dass keine gegenseitige Beeinflussung der Räder auftreten kann. Sind die beiden Stabilisatorenden jedoch verbunden, dann ist vereinfacht dargestellt als nutzbare Torsionslänge der Abstand der beiden Räder abzüglich der Schwenkmotorlänge nutzbar, da der Schwenkmotor keine Torsionsfeder darstellt.

Ein Problem besteht darin, dass der Kraftanstieg zwischen dem Betriebszustand "Stabilisatorabschnitte freigeschaltet" und "Stabilisatorabschnitte gekoppelt" aufgrund der großen Federrate des Stabilisators als unkomfortabel empfunden wird, auch dann, wenn über den Schwenkmotor noch kein Abstützmoment auf den Stabilisator ausgeübt wird. Letztlich steht insbesondere bei einem hydraulischen Schwenkmotor der Regelbereich zwischen den Betriebszuständen "Stabilisatorabschnitte freigeschaltet" und "Stabilisatorabschnitte wie mechanisch miteinander verbunden" nicht zur Verfügung.

Eine Lösung könnte darin bestehen, dass man von einem sehr torsionsweichen Stabilisator schafft, den man nach Bedarf vorspannen kann. Für diese Bauweise besteht jedoch in der Regel kein ausreichender Bauraum. Des Weiteren kann man den Torsionsquerschnitt nicht zu stark reduzieren, da ansonsten keine Dauerhaltbarkeit der Stabilisatoranordnung gegeben ist.

Insbesondere bei einem Schwenkmotor in der Bauform eines E-Motors, wie z. B. in der EP 1 030 790 B1 beschrieben ist, mit einer Blockiereinrichtung und einem Getriebe, verbleibt nur eine sehr kurze Torsionslänge.

Die WO 2004037574 offenbart eine Stabilisatoranordnung, die mittels eines Schwenkmotors verstellbar ist, mit einem zweigeteilten Stabilisator, dessen Stabilisatorabschnitte eine rotatorische Relativbewegung zueinander ausführen und bei einer gegensinnigen Verdrehbelastung eine Rückstellkraft ausüben, wobei die Stabilisatoranordnung unabhängig von einer Torsionsfederwirkung der Stabilisatorabschnitte eine weitere Feder aufweist, die eine Torsionsfederwirkung bewirkt, und zwischen den Stabilisatorabschnitten ein Getriebe angeordnet ist. Die Feder kann als eine Zug- oder Druckfeder ausgeführt sein.

In diesem Zusammenhang ist auch die DE 103 60 291 A1 zu nennen, die eine Feder zwischen einem Schwenkmotor und einem Spindelgetriebe zeigt.

Die Aufgabe der vorliegenden Erfindung besteht darin, eine Stabilisatoranordnung derart weiterzuentwickeln, die eine möglichst kleine Torsionsfederrate in Verbindung mit einer ausreichenden Dauerhaltbarkeit aufweist.

Erfindungsgemäß wird die Aufgabe durch die Merkmale des Patentanspruch 1 gelöst.

Der große Vorteil der Erfindung besteht darin, dass man die Stabilisatorabschnitte unabhängig von deren Federwirkung ausführen kann, sei es die Formgebung wie auch die Durchmesserverhältnisse. In letzter Konsequenz kann man auf die Federwirkung der Stabilisatorabschnitte verzichten und nur die Rückstellkraft der weiteren Feder nutzen.

Eine gewundene Biegefeder kann in Umfangsrichtung beliebig lang sein und aufgrund der reinen Biegebelastung mit einer vergleichsweise großen zulässigen mechanischen Spannung belastet werden.

Das Getriebe führt dazu, dass die zusätzliche Feder mit einer extrem kleinen Federrate ausgeführt sein kann, da das Übersetzungsverhältnis in der zweiten Potenz auf das Verhältnis der Drehwinkel an der Getriebeeingangsseite und der Getriebeausgangsseite einwirkt.

Man kann zur Steigerung des Effekts auch ein mehrstufiges Getriebe vorsehen.

Gemäß einem vorteilhaften Unteranspruch ist die Feder innerhalb eines Gehäuses angeordnet.

Um einen möglichst drehmomentschwachen und damit kompakten Schwenkmotor verwenden zu können ist zwischen der Feder und dem Schwenkmotor eine Getriebestufe ausgeführt.

Vorteilhafterweise ist das Getriebe als Planetengetriebe ausgeführt und für die gewundene Biegefeder ist eine Übertragungsscheibe getriebeausgangsseitig am Planetengetriebe angeordnet.

Eine gewundene Biegefeder kann je nach Belastungsrichtung und räumliche Ausgestaltung eine Durchmessererweiterung oder eine Längenverkürzung aus.

Deshalb ist die Übertragungsscheibe zumindest in Grenzen axial verschieblich gelagert.

Die Stabilisatoranordnung ist über zwei beabstandete Stabilisatorlager mit einem Fahrzeugaufbau verbunden, wobei sich das Gehäuse über den gesamten Abstand zwischen den beiden Stabilisatorlagern erstreckt. Durch den Einsatz der Feder kann man bei den Stabilisatorabschnitten gänzlich auf einen Torsionsbereich verzichten.

Ein generelles Problem bei der Verwendung eines Schwenkmotors besteht darin, dass dieser keine Axialbewegung durchführen darf. Deshalb besteht häufig eine Schraub-, Klemm-, oder Klebeverbindung mit dem Stabilisatorabschnitt. Bei der Erfindung ist zumindest ein Stabilisatorlager auf dem Gehäuse angeordnet und verhindert damit eine Axialbewegung.

Anhand der folgenden Figurenbeschreibung soll die Erfindung näher erläutert werden.

Es zeigt:

Fig. 1    Stabilisatoranordnung in Gesamtdarstellung

Fig. 2    Schwenkmotor im Längsschnitt

Fig. 3.    Stabilisatoranordnung mit einem mehrstufigen Getriebe

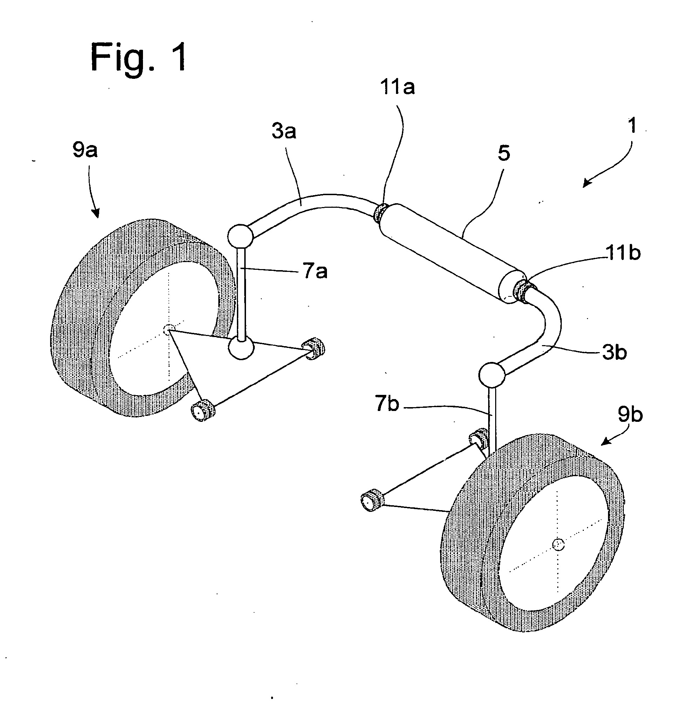

Die Figur 1 zeigt ein Prinzipschaubild einer Stabilisatoranordnung 1, die einen zweigeteilten Stabilisator mit Stabilisatorabschnitten 3a; 3b und einem zwischen den beiden Stabilisatorabschnitten angeordnetes Gehäuse 5 umfasst. Jeweils ein Stabilisatorabschnitt 3a; 3b ist über eine Pendelstütze 7a; 7b mit einem Fahrzeugrad 9a; 9b verbunden. Zwei Stabilisatorlager 11 a; 11 b verbinden die Stabilisatoranordnung mit einem nicht dargestellten Fahrzeugaufbau. Bei einer Einoder Ausfederungsbewegung eines der Fahrzeugräder 9a; 9b wird der entsprechende Stabilisatorabschnitt 3a; 3b in Abhängigkeit der Längenverhältnisse auf Biegung und/oder Torsion beansprucht.

In dieser beispielhaften Ausführung sind die Stabilisatorlager 11 a; 11 b unmittelbar auf dem Gehäuse 5 angeordnet, so dass die wirksame Torsionslänge der Stabilisatorabschnitte vergleichsweise knapp bemessen ist.

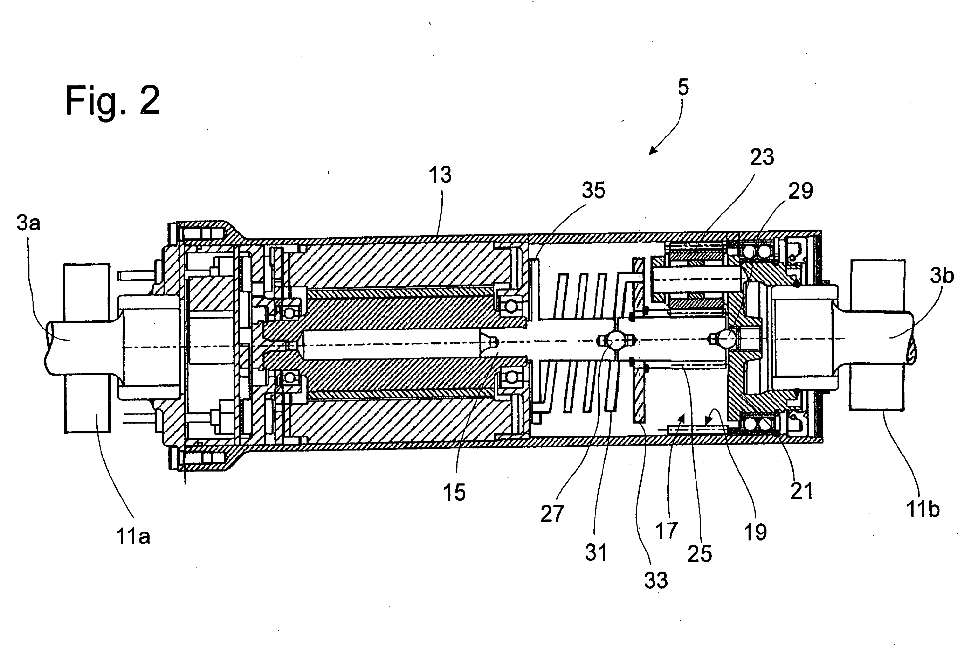

Die Figur 2 beschränkt sich auf einen Längsschnitt durch das Gehäuse 5. In dem Gehäuse 5 ist ein als hydraulischer, pneumatischer oder elektrischer Schwenkmotor 13 zur Verstellung der Stabilisatoranordnung ausgeführt. In diesem Fall liegt ein Elektromotor mit einer Rotorwelle 15 vor. Der Stabilisatorabschnitt 3a ist fest mit dem Gehäuse 5 des Schwenkmotors verbunden. Zwischen der Rotorwelle 15 und dem Stabilisatorabschnitt 3b ist ein einstufiges Getriebe angeordnet, in diesem Fall einem Planetengetriebe 17. Die Gehäuseinnenwandung bildet ein Hohlrad 19. Getriebeeingangsseitig greift der Stabilisatorabschnitt 3b an einem Planetenradträger 21 an, dessen Planetenräder 23 wiederum mit einem Sonnenrad 25 als Getriebeausgang im Eingriff stehen. Das Sonnenrad 25 wird von einer Zwischenwelle zwischen der Rotorwelle 15 und dem Planetenradträger 21 gebildet, wobei sich alle drei genannten Bauteil durch Lager 27; 29 relativ in Umfangsrichtung zueinander bewegen können.

Konzentrisch zur Rotorwelle 15 ist im Gehäuse 5 eine Feder 31 in der Bauform einer gewundenen Biegefeder nach DIN 13906-3 (vormals DIN 2088) angeordnet. Ein erstes Ende ist verdrehfest an einer Übertragungsscheibe 33 fixiert, die getriebeausgangsseitig am Sonnenrad des Planetenradgetriebes 17 zumindest in Grenzen axial beweglich angeordnet ist. Auf der Rotorwelle ist ein weiteres Befestigungselement 35 für das andere Ende der Feder 31 fixiert. Wie bereits ausgeführt können sich die Rotorwelle und die Zwischenwelle mit dem Sonnenrad 25 zueinander verdrehen.

Wenn der Schwenkmotor von der Energiezufuhr abgeschaltet ist, dann können sich die Stabilisatorenden abgesehen von Reibungskräften, z. B. in den Lagerstellen und im Getriebe 17 unabhängig voneinander bewegen. Wird der Schwenkmotor nur minimal bestromt oder bei einem hydraulischen Schwenkmotor die Verbindung zwischen den einzelnen Arbeitskammern blockiert oder mit Druckmedium versorgt, dann übt die Feder 31 auf die Bewegung der Stabilisatorabschnitte 3a; 3b eine Rückstellkraft aus, unabhängig von der Bewegungsrichtung der Stabilisatorabschnitte. Aufgrund der getriebeausgangsseitigen Anbindung der Feder kann das Übersetzungsverhältnis des Getriebes 17 einer mathematischen Quadratfunktion folgend genutzt werden, um die auf die Feder 31 wirksamen Kräfte im selben Verhältnis zu vermindern, so dass mit einer vergleichsweise kleinen und schwachen Feder die Federwirkung eines konventionellen Stabilisators erreicht werden kann.

Die Federarbeit für den Stabilisatorabschnitt und der Feder 31 folgt der Gleichung:

$$A = c \times \varphi/2 \times \varphi \qquad (1)$$

Die Federarbeit des Stabilisatorabschnitts und der Feder 31 müssen gleich sein. Daraus folgt

$$C_{Feder} \times \varphi^2_{Feder} = C_{Stab} \, \varphi^2_{Stab} \qquad (2)$$

$C_{Feder}$ = Federrate der Feder 31
$\varphi_{Feder}$ = Verdrehwinkel der Feder 31
$C_{Stab}$ = Federrate eines Stabilisatorabschnitts
$\varphi_{Stab}$ = Verdrehwinkel des Stabilisatorabschnitts

Der Verdrehwinkel $\varphi_{Feder}$ und der Verdrehwinkel $\varphi_{Stab}$ stehen über das Übersetzungsverhältnis i des Getriebes ebenfalls in einer definierten Relation zueinander.

$$i \times \varphi_{Feder} = \varphi_{Stab} \qquad (3)$$

Die Gleichung (3) in die Gleichung (2) eingesetzt ergibt:

$$\text{CFeder} \times \varphi\text{Feder}^2 = \text{CStab} \times i^2\varphi\text{Feder}^2 \quad (4)$$

Daraus folgt:

$$\text{CFeder}/\text{CStab} = i^2 \quad (5)$$

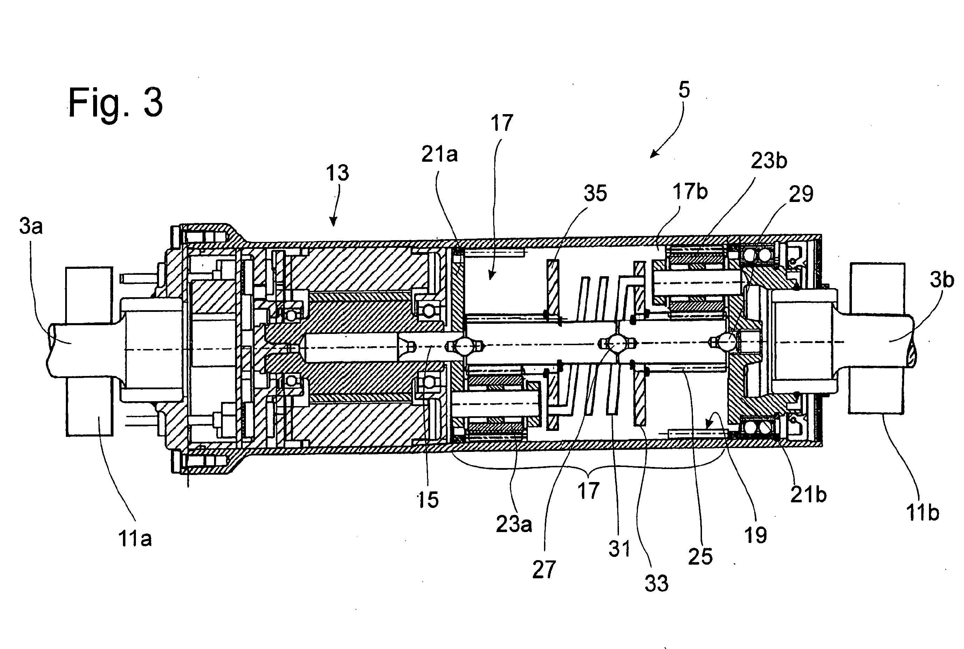

Die Figur 3 zeigt eine Ausführungsform mit einem zweistufigen Getriebe 17. Zwischen der ersten Getriebestufe 17a und der zweiten Getriebestufe 17b ist die Feder 31 angeordnet. Über die erste Getriebestufe 17a wird die Feder 31 vorgespannt, so dass auch mit einem sehr kleinen und leistungsschwachen Schwenkmotor 13 eine sehr schnell reagierende Stabilisatoranordnung realisiert werden kann.

Generell lässt sich die Stabilisatoranordnung auch ohne Schwenkmotor 13 als rein passives System mit dem Ziel einer kleinen Federrate ausführen.

## Patentansprüche

1. Stabilisatoranordnung (1), die mittels eines Schwenkmotors (13) verstellbar ist, mit umfassend einen zweigeteilten Stabilisator (3a; 3b), dessen Stabilisatorabschnitte (3a; 3b) eine rotatorische Relativbewegung zueinander ausführen und bei einer gegensinnigen Verdrehbelastung eine Rückstellkraft ausüben, wobei die Stabilisatoranordnung (1) unabhängig von einer Torsionsfederwirkung der Stabilisatorabschnitte (3a; 3b) eine weitere Feder (31) aufweist, die eine Torsionsfederwirkung bewirkt, und zwischen den Stabilisatorabschnitten (3a; 3b) ein Getriebe (17) angeordnet ist, **dadurch gekennzeichnet,** **dass** die Feder (31) als eine gewundene Biegefeder ausgeführt ist.

2. Stabilisatoranordnung nach Anspruch 1, **dadurch gekennzeichnet,** **dass** das Getriebe (17) mehrstufig ausgeführt ist.

3. Verstellbare Stabilisatoranordnung nach Anspruch 1, **dadurch gekennzeichnet,** **dass** die Feder (31) innerhalb eines Gehäuses (5) angeordnet ist.

4. Verstellbare Stabilisatoranordnung nach Anspruch 2, **dadurch gekennzeichnet,** **dass** zwischen der Feder und dem Schwenkmotor eine Getriebestufe ausgeführt ist.

5. Verstellbare Stabilisatoranordnung nach einem der Ansprüche 1 -4, **dadurch gekennzeichnet,** **dass** das Getriebe (17) als Planetengetriebe ausgeführt ist und für die gewundene Biegefeder (31) eine Übertragungsscheibe (33) getriebeausgangsseitig am Planetengetriebe angeordnet ist.

6. Verstellbare Stabilisatoranordnung nach Anspruch 5, **dadurch gekennzeichnet,** **dass** die Übertragungsscheibe (33) zumindest in Grenzen axial verschieblich gelagert ist.

7. Verstellbare Stabilisatoranordnung nach Anspruch 1, **dadurch gekennzeichnet,** **dass** die Stabilisatoranordnung (1) über zwei beabstandete Stabilisatorlager (11a; 11 b) mit einem Fahrzeugaufbau verbunden ist, wobei sich das Gehäuse (5) über den gesamten Abstand zwischen den beiden Stabilisatorlagern (11a; 11b) erstreckt.

8. Verstellbare Stabilisatoranordnung nach Anspruch 7, **dadurch gekennzeichnet,** **dass** zumindest ein Stabilisatorlager (11a; 11b) auf dem Gehäuse (5) angeordnet ist.

## Claims

1. Anti-roll bar arrangement (1) which can be adjusted by means of a pivoting motor (13), comprising a two-part anti-roll bar (3a; 3b), the anti-roll bar sections (3a; 3b) of which perform a rotational relative movement with respect to one another and, in the case of a rotational loading in the opposite direction, exert a restoring force, the anti-roll bar arrangement (1) having, independently of a torsion spring effect of the anti-roll bar sections (3a; 3b), a further spring (31) which brings about a torsion spring effect, and a gear mechanism (17) being arranged between the anti-roll bar sections (3a; 3b), **characterized in that** the spring (31) is configured as a wound leaf spring.

2. Anti-roll bar arrangement according to Claim 1, **characterized in that** the gear mechanism (17) is configured with multiple stages.

3. Adjustable anti-roll bar arrangement according to Claim 1, **characterized in that** the spring (31) is arranged within a housing (5).

4. Adjustable anti-roll bar arrangement according to Claim 2, **characterized in that** a gear mechanism stage is configured between the spring and the pivoting motor.

**5.** Adjustable anti-roll bar arrangement according to one of Claims 1 to 4, **characterized in that** the gear mechanism (17) is configured as a planetary gear mechanism and a transmission plate (33) is arranged on the planetary gear mechanism on the gear-mechanism output side for the wound leaf spring (31).

**6.** Adjustable anti-roll bar arrangement according to Claim 5, **characterized in that** the transmission plate (33) is mounted such that it can be displaced axially at least in limits.

**7.** Adjustable anti-roll bar arrangement according to Claim 1, **characterized in that** the anti-roll bar arrangement (1) is connected to a vehicle body via two anti-roll bar bearings (11a; 11b) which are spaced apart from one another, the housing (5) extending over the entire spacing between the two anti-roll bar bearings (11a; 11b).

**8.** Adjustable anti-roll bar arrangement according to Claim 7, **characterized in that** at least one anti-roll bar bearing (11a; 11b) is arranged on the housing (5).

## Revendications

**1.** Agencement stabilisateur (1), qui peut être réglé au moyen d'un moteur de pivotement (13), comprenant un stabilisateur en deux parties (3a ; 3b), dont les portions de stabilisateur (3a ; 3b) effectuent un mouvement de rotation relatif l'une par rapport à l'autre et exercent une force de rappel en cas de sollicitation de rotation en sens inverse, l'agencement stabilisateur (1) présentant, indépendamment d'un effet de ressort de torsion des portions de stabilisateur (3a ; 3b), un ressort supplémentaire (31) qui produit un effet de ressort de torsion et une transmission (17) étant disposée entre les portions de stabilisateur (3a ; 3b),
**caractérisé en ce que**
le ressort (31) est réalisé sous forme de ressort de flexion enroulé.

**2.** Agencement stabilisateur selon la revendication 1,
**caractérisé en ce que**
la transmission (17) est à plusieurs étages.

**3.** Agencement stabilisateur réglable selon la revendication 1,
**caractérisé en ce que**
le ressort (31) est disposé à l'intérieur d'un boîtier (5).

**4.** Agencement stabilisateur réglable selon la revendication 2,
**caractérisé en ce**
**qu'**un étage de transmission est réalisé entre le ressort et le moteur de pivotement.

**5.** Agencement stabilisateur réglable selon l'une quelconque des revendications 1 à 4,
**caractérisé en ce que**
la transmission (17) est réalisée sous forme d'engrenage planétaire et un disque de transmission (33) est disposé du côté de la sortie de la transmission sur l'engrenage planétaire pour le ressort de flexion enroulé.

**6.** Agencement stabilisateur réglable selon la revendication 5,
**caractérisé en ce que**
le disque de transmission (33) est monté de manière déplaçable axialement au moins dans certaines limites.

**7.** Agencement stabilisateur réglable selon la revendication 1,
**caractérisé en ce que**
l'agencement stabilisateur (1) est connecté à la carrosserie du véhicule par le biais de deux paliers de stabilisateur espacés (11a ; 11b), le boîtier (5) s'étendant sur toute la distance entre les deux paliers de stabilisateur (11a ; 11b).

**8.** Agencement stabilisateur réglable selon la revendication 7,
**caractérisé en ce**
**qu'**au moins un palier de stabilisateur (11a ; 11b) est disposé sur le boîtier (5).

# Fig. 1

# Fig. 2

EP 1 785 294 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1030790 B1
- WO 2004037574 A
- DE 10360291 A1